# EUROPÄISCHE PATENTSCHRIFT

(11) **EP 1 859 599 B1**
(45) Veröffentlichungstag und Bekanntmachung des Hinweises auf die Patenterteilung: **17.03.2010**
(21) Anmeldenummer: 06723398.1
(22) Anmeldetag: 14.03.2006
(51) Int. Cl.: H04L 29/06, H04L 12/18

(54) **Daten-Gruppenrufdienst**
Data group paging service
Service de radiomessagerie de groupe et de données

(30) Priorität: 17.03.2005 DE 102005013455; 24.08.2005 DE 102005040280
(43) Veröffentlichungstag der Anmeldung: 28.11.2007
(73) Patentinhaber: T-Mobile International AG, 53227 Bonn (DE)
(72) Erfinder: ACHTER, Johannes, A-2100 Korneugurg (AT); BISCHINGER, Kurt, A-1100 Wein (AT)
(74) Vertreter: Riebling, Peter
(86) Internationale Anmeldenummer: PCT/EP2006/002310
(87) Internationale Veröffentlichungsnummer: WO 2006/097269

(56) Entgegenhaltungen:
- WO-A-99/63773
- WO-A-2004/107719
- US-A1- 2005 041 617

## Beschreibung

Die Erfindung betrifft einen Data Group Call Service (Daten-Gruppenrufdienst) und Insbesondere Verfahren und Vorrichtungen zur Implementierung eines solchen Daten-Gruppenrufdienstes.

Der bekannte Voice Group Call Service (VGCS) oder Sprach-Gruppenrufdienst, beschrieben beispielsweise in der 3GPP Spezifikation TS 43.068, ermöglicht die Definition von Gruppen mit gemeinsamen Downlink und Uplink Kanälen. Ein Mitglied (User) der Gruppe kann sprechen, während alle anderen hören. Will ein anderer User sprechen, muss er den freigewordenen Sprachkanal anfordern. Weiters ist die Rolle eines Dispatchers (Disponenten) definiert, der jederzeit sprechen kann. Sollte zum gleichen Zeitpunkt ein User sprechen, so wird die Sprache gemischt und von allen anderen Benutzern gemischt gehört.

Die Ausweitung des bekannten VGCS auf eine Übertragung von Daten, d.h. das Verteilen von Daten innerhalb der vordefinierten Gruppe, ist derzeit nicht vorgesehen oder definiert, weder parallel zu einem bestehenden Gruppengespräch noch unabhängig davon.

US 2005 0041697 A1 offenbart ein Verfahren zur Durchführung eines PoC-Gesprächsdienstes. PoC ist die Abkürzung für "Push-to-Talk over Cellular", bei dem es sich um einen Paketdaten-basierten Gesprächsdienst handelt.

WO 99 63 773 A1 offenbart einen Paketdaten-basierten Übertragungsdienst auf Basis des General Packet Radio Service (GPRS), wobei ein sogenannter Packet Handler vorgesehen wird, welcher der jeweiligen Verbindung Funkressourcen zuweist.

WO 2004 107719 A1 offenbart Verfahren zum Abhören von Teilnehmern bei einer Gruppenruf-Verbindung.

Es ist daher die Aufgabe der Erfindung, Verfahren und Vorrichtungen aufzuzeigen, die eine Datenübertragung, beispielsweise von Bilddaten, bei einem Sprach-Gruppenrufdienst ermöglichen.

Diese Aufgabe wird erfindungsgemäß durch die Merkmale der unabhängigen Patentansprüche gelöst.

Bevorzugte Ausgestaltungen und vorteilhafte Weiterbildungen der Erfindung sind in den abhängigen Ansprüchen angegeben.

Erfindungsgemäß werden Verfahren und Vorrichtungen zur Durchführung eines Daten-Gruppenrufs in GSM oder UMTS Netzen mit Datenübertragungsmöglichkeit im Zusammenhang mit einem Sprach-Gruppenrufdienst (VGCS: Voice Group Call Service) beschrieben.

Entsprechend einer Ausgestaltung der Erfindung ist ein Verfahren zum Aufbau einer Datenverbindung bei einem Sprach-Gruppenrufdienst zwischen mehreren Gruppenmitgliedern als User eines Mobilkommunikationsnetzes vorgesehen, bei dem Funktionen eines IP Multimedia Subsystems, IMS, verwendet werden, wobei eine Session Initiation Protocol, SIP, kontrollierte Datenverbindung zwischen einem Sender, Endgerät, und einem oder mehreren Empfängern hergestellt wird, wobei jedem User zusätzlich zu einer Gruppenrufdienst-Identität, VGCS-ID, eine IMS-Gruppen-Identität, IMS group ID, zugeteilt wird, mit deren Hilfe der User zu einem Application Server im IMS geroutet wird, welcher einen Daten-Gruppenrufdienst zwischen den Usern abwickelt.

Ein Ausführungsbeispiel der Erfindung wird nachfolgend mit Bezug auf die Zeichnungsfiguren näher erläutert. Hierbei ergeben sich weitere Merkmale, Vorteile und Anwendungen der Erfindung.
Figur 1 zeigt eine vereinfachte Architektur einer ersten Ausgestaltung eines Daten-Gruppenrufdienstes basierend auf einem IP Multimedia Core Network Subsystem (IMS) und einem Multimedia Broadcast Multicast Service (MBMS).
Figur 2 zeigt eine vereinfachte Architektur des Daten-Gruppenrufdienstes, basierend auf einem Serviceknoten (SK) und einem MBMS.

Erfindungsgemäß kann ein Daten-Gruppengespräch in Zusammenhang mit einem Voice Group Call (VGC) - unabhängig ob dieser gerade besteht oder nicht - realisiert werden.
Die Übertragung der Daten von vom Endgerät 1 eines Users an ein Broadcast-/Multicast-Service Center 5 und weiter an Endgeräte eines oder mehrerer Empfänger erfolgt paketorientiert über Komponenten eines GPRS Netzwerks. Ein Serving GPRS Support Node SGSN 3 steuert den Datenverkehr vom Endgerät über die Funkfeststationen BTS/BSC und umgekehrt und übernimmt das Routing von Datenpaketen, das Management logischer Verbindungen und Authentfizierungsfunktionen.
Ein Gateway GPRS Support Node 4 ist die Verbindungseinheit zu den angeschlossenen Netzen. Das GGSN 4 übernimmt dabei die Konvertierung der Paketformate und die Umsetzung der Adressen zwischen Datennetzen und Mobilfunknetz. Die Mobilvermittlungsstelle 2 wird ausschließlich zur Abwicklung des VGCS verwendet. In den Zeichnungen sind mit dicken Verbindungslinien Schnittstellen dargestellt, über die Nutzdaten übertragen werden, mit dünnen Verbindungslinien Schnittstellen, über die der Signalisierungsverkehr übertragen wird und mit doppelten, dünnen Verbindungslinien Schnittstellen oder Einrichtungen, die erfindungsgemäß neu installiert werden müssen

Der Multimedia Broadcast Multicast Service (MBMS) ist eine Erweiterung des UMTS-Netzes für Multimedia- und Broadcastdienste, die auf eine Optimierung des Datentransports bei gleichzeitiger Übertragung von vielen Nutzern abzielt. MBMS arbeitet mit der Kleinzellenstruktur des UMTS-Netzes und wird von 3GPP zur Standardisierung vorangetrieben.

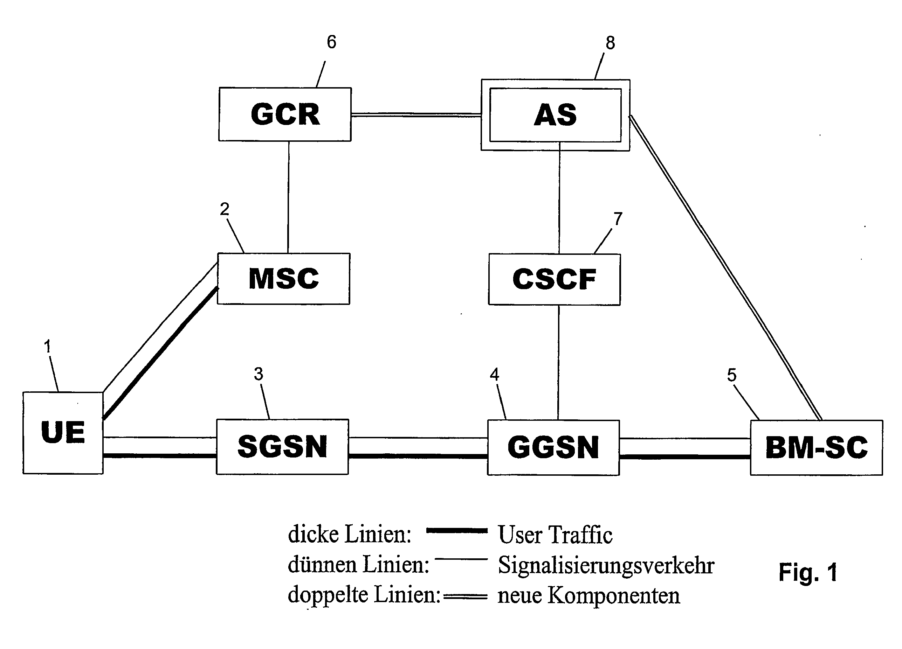

### Erste Variante - IMS, Figur 1:

Zur Realisierung wird auf Funktionen eines IP Multimedia core network Subsysteme (IMS) zurückgegriffen (3GPP TS 22.228). IP Multimedia Subsystems (IMS) sind zentrale Integrationsplattformen für die Steuerung von Mobilfunkdiensten, die Kundenverwaltung und das Accounting für Mobilfunkdienste, die auf dem IP-Protokoll aufsetzen.

Es wird erfindungsgemäß eine SIP (Session Initiation Protocol) kontrollierte Datenverbindung zwischen dem Sender, Endgerät 1, und den Empfängern hergestellt. Das Session Initiation Protocol (SIP) ist Standard für ein Signalisierungsprotokoll, das Sitzungen mit zwei und mehr Teilnehmern aufbauen, modifizieren und beenden kann. Dieses textorientierte Protokoll, das auf HTTP basiert, dient der Übertragung von Echtzeitdaten über paketgestützte Netze. Das SIP-Protokoll ist funktional vergleichbar dem H.323-Protokoll und kann interaktive Kommunikationsdienste einschließlich Sprache über IP-Netze übertragen. Die SIPinformationen können über das TCP-Protokoll oder das UDP-Protokoll transportiert werden. SIP besitzt eine offene internetbasierende Struktur und ermöglicht CLASS-Features (Custom Local Area Signalling Service) wie etwa die Übermittlung der Identität des Anrufers oder die Anrufweiterleitung in IP-basierten Netzen.

Dem User wird zusätzlich zu einer Gruppenrufdienst-Identität (VGCS-ID) auch eine neu einzuführende IMS-Gruppen-Identität (IMS group ID) zugeteilt, die auf der SIM Karte oder UICC des Users gespeichert wird und dem Endgeräteclient zur Verfügung steht. Sobald der User eine VGCS-ID des VGCS aktiv setzt (das ist der Zeitpunkt ab welchem er Notifikationen der entsprechenden Gruppe erhält bzw. selbst den Group Call aufbauen kann) prüft der Client im Terminal ob zu dieser VGCS-ID auch eine IMS group ID vorhanden ist. Wenn eine IMS group ID vorhanden ist, registriert sich der IMS Client am Endgerät mit Hilfe der IMS group ID. Anhand dieser IMS group ID wird der User zu einem speziellen Application Server 8 im IMS geroutet, welcher für die Abwicklung des Data group calls zuständig ist.

Der Application Server 8 stellt mit Hilfe der im IMS vorgesehenen Mechanismen die Verbindung zu allen Gruppenmitgliedern her und sorgt optional dafür, dass immer nur ein Gruppenmitglied Daten absetzen (uploaden) kann und alle anderen diese Daten erhalten. Die Möglichkeit für eines User zu senden wird entsprechend an den Client signalisiert und auf dem Terminal des Users dargestellt. Die Anforderung zu senden wird vom Client mittels einer SIP Nachrichten zum Application Server geschickt.

Zusätzlich kann analog einem VGCS ein vordefinierter Dispatcher parallel zu einem User Daten an alle Gruppenmitglieder versenden.

Der Datendownlink erfolgt entweder über dezidierte Kanäle (point to point Verbindungen) oder unter Einbindung des MBMS (Multimedia Broadcast Multicast System, 3GPP TS 22.146). In letzterem Fall muss der Application Server eine Verbindung zu einem Broadcast-/Multicast-Servicecenter (BM-SC) 5 herstellen, von dem aus die Daten im Multicastbetrieb an die einzelnen Users weiterverteilt werden.

Der korrekte Empfang der Daten kann über Quittierungen durch die einzelnen Clients bestätigt werden.

Der Application Server 8 greift auf die Daten des Group Call Registers 6 (GCR) zu, um die notwendigen Informationen für den Aufbau des Daten-Gruppenrufs zu erhalten. Beide Funktionen können auch gemeinsam implementiert werden.

Weiters ist ein Interface zwischen dem BM-SC 5 und dem GCR 6 oder dem Application Server 8 notwendig, um die notwendigen Daten für einen Multicast Betrieb zu übertragen.

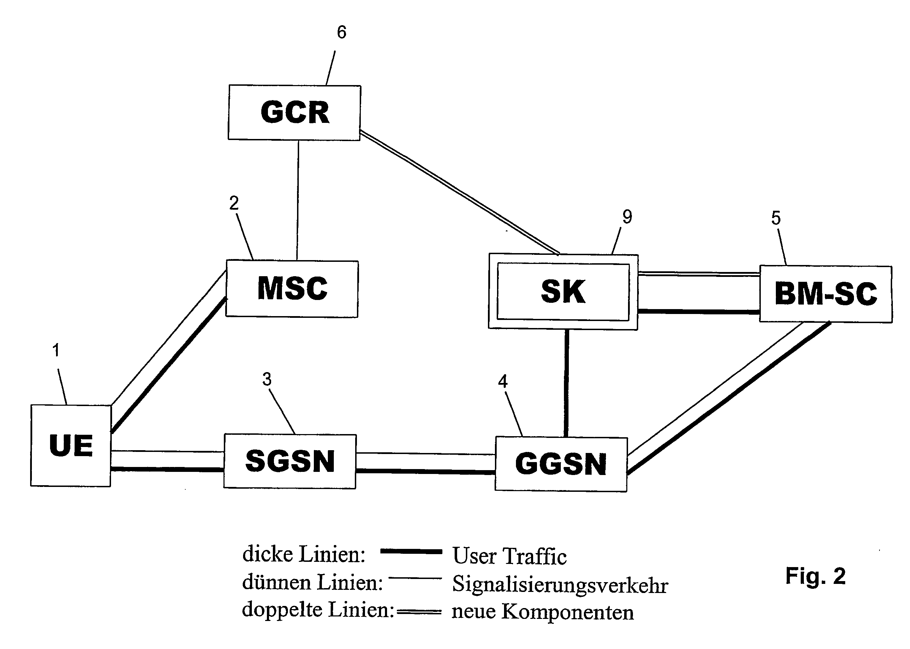

### Zweite Variante, nicht Teil der vorliegenden Erfindung-Serviceknoten (SK), Figur 2

Anstelle einer SIP kontrollierten Daten-Direktverbindung gemäß der ersten Variante werden die Daten des Senders, Endgerät 1, an einen Serviceknoten 9 (SK) gesendet, welcher als Relais agiert und die Daten an alle Empfänger weiterleitet.

Der User muss zusätzlich zur Group ID für den VGC eine IP Adresse für den Serviceknoten administrieren. Diese wird auf der SIM oder UICC gespeichert und steht dem Endgeräteclient zur Verfügung. Sobald der User eine Group ID des VGCS aktiv setzt (das ist der Zeitpunkt ab welchem er Notifikationen der entsprechenden Gruppe erhält bzw. selbst den Group Call aufbauen kann) prüft der Client im Terminal ob zu dieser Group-ID auch eine Serviceknoten IP Adresse vorhanden ist. Wenn ja wird GPRS im Endgerät aktiviert - es geht online.

Sendet der Nutzer nun Daten, werden diese gemeinsam mit der Group ID über einen SGSN 3 und einen GGSN 4 zur vordefinierten IP Adresse geroutet, hinter der sich der Serviceknoten 9 verbirgt. Dazu kann auch optional ein eigener APN (Access Point Name) verwendet werden. Der Serviceknoten 9 prüft nun anhand der Absender-IP Adresse oder der Sender IMSI, sowie der Group ID die Berechtigung und sendet die Daten an die Empfänger (das sind die restlichen Gruppenmitglieder) weiter. Die notwendigen Daten (Berechtigungen, Gruppenmitglieder) erhält der Serviceknoten vom Group Call Register 6 (GCR). Dazu ist ein Interface zwischen GCR 6 und Serviceknoten 9 notwendig. Die gemeinsame Implementierung von GCR 6 und Serviceknoten 9 ist ebenso möglich.

Zusätzlich kann analog einem VGCS ein vordefinierter Dispatcher parallel zu einem User Daten an alle Gruppenmitglieder versenden.

Es ist nicht erforderlich, dass der Serviceknoten 9 abwartet, bis er alle Sendedaten empfangen hat, bevor er diese an die Empfänger weiterleitet. Ein übliches Routerverhalten ist ausreichend.

Nachdem es hier keine Signalisierungsnachrichten zur Steuerung der Session gibt, müssen besondere Mechanismen benutzt werden um, falls gewünscht, eine Ablaufsteuerung durchzuführen. Z.B. ist die Steuerung durch sogenannte Token denkbar. Ein Client, Endgerät 1, der das Recht zu senden erhalten möchte, sendet einen bestimmten Datensatz an den Serviceknoten 9, worauf dieser mit einem bestimmten Datensatz, dem Token, antwortet. So weiß der Sender, Endgerät 1, dass er nun senden kann. Zum Abschluss sendet der Client, Endgerät 1, wieder den Token an den Serviceknoten 9 und dieser kann ihn nun an jemand anderen weitergeben. Dies kann auf Basis von zwischengespeicherten Anforderungen geschehen, oder aber auch anhand von der ersten eingehenden Anfrage (Request) nach Zurückerhalt des Tokens.

Die Verteilung der Daten vom Serviceknoten 9 zu den Empfängern erfolgt über point to point Verbindungen oder optional über ein MBMS System. Dazu muss der Serviceknoten 9 die Daten an das BM-SC 5 weiterleiten. Eine Verbindung des GCR 6 mit dem BM-SC 5 ermöglicht den Datenabgleich und somit das Versenden an die entsprechenden Gruppe. Diese Verbindung kann auch über den Serviceknoten 9 erfolgen.

### Allgemeingültige Optionen

Die Ablaufsteuerung für die Datenverbindung ist optional und kann unabhängig von der Ablaufsteuerung des VGCS erfolgen.

Es besteht die Möglichkeit, die zu sendende Datenmenge zu begrenzen (Datenvolumen) oder die Übertragung zeitlich zu beschränken. D.h. bei Erreichen des maximalen Volumens oder der Maximalzeit verliert der Sender das Recht zu senden und es kann einem anderen Nutzer verteilt werden.

### Liste der Bezugszeichen und Abkürzungen

- 1: Endgerät (UE)
- 2: Vermittlungsstelte (MSC)
- 3: Serving GPRS Support Node (SGSN)
- 4: Gateway GPRS Support Node
- 5: Broadcast- / Multicast - Service Center
- 6: Group Call Register
- 7: Call State Control Function
- 8: Application Server
- 9: Serviceknoten

- UE: User Equipment (Endgerät)
- SGSN: Serving GPRS Support Node
- GGSN: Gateway GPRS Support Node
- MSC: Mobile-services Switching Center
- CSCF: Call State Control Function
- GCR: Group Call Register
- AS: Application Server
- SK: Serviceknoten
- BM-SC: Broadcast- / Multicast - Service Center

## Patentansprüche

1. Verfahren zum Aufbau einer Datenverbindung eines Daten-Gruppenrufdienstes zwischen mehreren Gruppenmitgliedern einer Sprach-Gruppenruf-Gruppe im Zusammenhang mit eine Sprach-Gruppenrufdienst in einem Mobilkommunikationsnetz, **dadurch gekennzeichnet,**
**dass** Funktionen eines IP Multimedia Subsystems, IMS, verwendet werden,
wobei die Datenverbindung in Form einer Session Initiation.Protocol, SIP, kontrollierten Datenverbindung zwischen einem sendenden Gruppenmitglied und einem oder mehreren empfangenden Gruppenmitgliedern hergestellt wird über welche ein Daten-Gruppenrufdienst durchgeführt wird,
wobei jedem Gruppenmitglied zusätzlich zu einer Sprach-Gruppenrufdienst-Identität, VGCS-ID, Voice Group Call Service ID, eine IMS-Gruppen-Identität, IMS group ID, zugeteilt wird, mit deren Hilfe Daten jedes Gruppenmitgliedes zu einem Application Server (8) im IMS geroutet werden, über welchen der Daten-Gruppenrufdienst zwischen den Gruppenmitgliedern gesteuert wird.

2. Verfahren nach Anspruch 1, **dadurch gekennzeichnet, dass** der Application Server (8) mit Hilfe der im IMS vorgesehenen Mechanismen eine Verbindung zu allen Gruppenmitgliedern herstellt und sicherstellt, dass immer nur ein Gruppenmitglied Daten absetzen kann und alle anderen Gruppenmitglieder diese Daten erhalten.

3. Verfahren nach einem der vorhergehenden Ansprüche, **dadurch gekennzeichnet, dass** eine Anforderung eines Gruppenmitgliedes zu senden vom Client seines Endgerätes (1) mittels einer SIP Nachrichten zum Application Server (8) übermittelt wird.

4. Verfahren nach einem der vorhergehenden Ansprüche, **dadurch gekennzeichnet, dass** der Application Server (8) auf Daten eines Group Call Registers (6) zugreift, um Informationen für den Aufbau des Daten-Gruppenrufes zu erhalten.

5. Verfahren nach einem der Ansprüche 1-4, **dadurch gekennzeichnet, dass** die Übertragung der Daten an die empfangenden Gruppenmitglieder über dezidierte GPRS Kanäle in Form von Punkt-zu-Punkt Verbindungen, erfolgt.

6. Verfahren nach einem der Ansprüche 1-4, **dadurch gekennzeichnet, dass** die Übertragung der Daten an die empfangenden Gruppenmitglieder unter Einbindung eines Multimedia Broadcast Multicast Systems erfolgt.

7. Verfahren nach Anspruch 6, **dadurch gekennzeichnet, dass** der Application Server eine Verbindung zu einem Broadcast-/Multicast-Servicecenter (5) herstellt, von dem aus die Daten im Multicastbetrieb an die einzelnen empfangenden Gruppenmitglieder weiterverteilt werden.

8. Verfahren nach einem der Ansprüche 6 oder 7, **dadurch gekennzeichnet, dass** die Informationen für einen Multicast Betrieb über ein Interface zwischen dem BM-SC (5) und dem GCR (6) oder dem Application Server (8) übertragen werden.

9. System zum Aufbau einer Datenverbindung eines Daten-Gruppenrufdienstes zwischen mehreren Gruppenmitgliedern einer Sprach-Gruppenruf-Gruppe im Zusammenhang mit einem Sprach-Gruppenrufdienst in einem Mobilkommunikationsnetz, **dadurch gekennzeichnet daß** es umfasst:
ein IP Multimedia Subsystem, IMS,
Mittel zum Herstellen der Datenverbindung in Form einer durch ein Session Initiation Protocol, SIP, kontrollierten Datenverbindung als Bestandteil eines Daten-Gruppenrufdienstes zwischen einem sendenden Gruppenmitglied und
einem oder mehreren empfangenden Gruppenmitgliedern,
Mittel zum Zuteilen einer IMS-Gruppen-Identität, IMS group ID, zu jedem Gruppenmitglied zusätzlich zu einer Sprach-Gruppenrufdienst-Identität, VGCS-ID,
einen Application Server (8) im IMS zur Steuerung des Daten-Gruppenrufdienstes zwischen Grupperimitgliedem, wobei Daten jedes Gruppenmitglieds mit Hilfe der IMS-Gruppen-Identität, IMS group ID, zum Application Server (8) geroutet werden.

10. Computerprogramm mit einem Programmcode, der auf einem Computer ausgeführt ein Verfahren nach einem der Ansprüche 1 bis 8 durchführt.

11. Computerprogrammprodukt, das einen auf einem Computer ausführbaren Programmcode zur Durchführung des Verfahrens nach einem der Ansprüche 1 bis 8 umfasst.

## Claims

1. Process for setting up a data connection of a Data Group Call Service between several group members of a Voice Group Call Group in association with a Voice Group Call Service in a mobile communications network, **characterised in that** functions of an IP Multimedia Subsystem, IMS, are used, wherein the data connection in the form of a Session Initiation Protocol, SIP, controlled data connection is established between a sending group member and one or more receiving group members, via which a Data Group Call Service is implemented, wherein an IMS group identity, IMS group ID, is allocated to each group member in addition to a Voice Group Call Service Identity, VGCS ID, Voice Group Call Service ID, and with the aid of which data of each group member is routed to an Application Server (8) in the IMS, via which the Data Group Call Service between the group members is controlled.

2. Process according to claim 1, **characterised in that** the Application Server (8) with the aid of the mechanisms provided in the IMS establishes and ensures a connection to all group members, **in that** only ever one group member may transmit data and all other group members receive these data.

3. Process according to one of the preceding claims, **characterised in that** a request of a group member to send from the client of his terminal (1) by means of an SIP message is transmitted to the Application Server (8).

4. Process according to one of the preceding claims, **characterised in that** the Application Server (8) accesses data of a Group Call Register (6) to obtain information for the set-up of the Data Group Call.

5. Process according to one of claims 1-4, **characterised in that** the transmission of data to the receiving group members is effected via dedicated GPRS channels in the form of point-to-point connections.

6. Process according to one of claims 1-4, **characterised in that** the transmission of data to the receiving group members is effected with integration of a Multimedia Broadcast Multicast System.

7. Process according to claim 6, **characterised in that** the Application Server establishes a connection to a Broadcast/Multicast Service Centre (5), from which the data is distributed further in multicast mode to the individual receiving group members.

8. Process according to one of claims 6 or 7, **characterised in that** the information for Multicast mode is transmitted via an interface between the BM-SC (5) and the GCR (6) or the Application Server (8).

9. System for setting up a data connection of a Data Group Call Service between several group members of a Voice Group Call Group in association with a Voice Group Call Service in a mobile communications network, **characterised in that** it comprises:
an IP Multimedia Subsystem, IMS,
means for establishing the data connection in the form of a data connection controlled by a Session Initiation Protocol, SIP, as a constituent of a Data Group Call Service between a sending group member and one or more receiving group members,
means for allocating an IMS group Identity, IMS group ID, to each group member in addition to a Voice Group Call Service Identity, VGCS ID,
an Application Server (8) in the IMS to control the Data Group Call Service between group members, wherein data of each group member is routed with the aid of the IMS group Identity, IMS group ID, to the Application Server (8).

10. Computer program with a program code which implements a process according to one of claims 1 to 8 executed on a computer.

11. Computer program product which comprises a program code which can be executed on a computer to implement the process according to one of claims 1 to 8.

## Revendications

1. Procédé pour établir une liaison de données d'un service d'appel de groupe de données entre plusieurs membres d'un groupe d'appel vocal dans le cadre d'un service d'appel de groupe vocal dans un réseau de communication mobile,
**caractérisé en ce que** des fonctions d'un sous-système multimédia IP, IMS, sont utilisées,
étant précisé que la liaison de données est réalisée sous la forme d'une liaison de données contrôlée par protocole SIP, Session Initiation Protocol, entre un membre de groupe émetteur et un ou plusieurs membres de groupe receveurs, grâce à laquelle un service d'appel de groupe de données est réalisé,
et qu'on attribue à chaque membre du groupe, en plus d'une identité de service d'appel de groupe vocal, VGCS-ID Voice Group Call Service ID, une identité de groupe IMS, IMS group ID, à l'aide de laquelle des données de chaque membre du groupe sont acheminées jusqu'à un serveur d'application (8) dans l'IMS, par l'intermédiaire duquel le service d'appel de groupe de données est commandé entre les membres du groupe.

2. Procédé selon la revendication 1, **caractérisé en ce que** le serveur d'application (8) réalise une liaison avec tous les membres du groupe à l'aide des mécanismes prévus dans l'IMS, et garantit qu'il y ait toujours un seul membre du groupe qui puisse émettre des données et que tous les autres membres du groupe reçoivent ces données.

3. Procédé selon l'une des revendications précédentes, **caractérisé en ce qu'**une demande d'un membre de groupe d'émettre est transmise par le client de son terminal (1) à l'aide d'un message SIP au serveur d'application (8).

4. Procédé selon l'une des revendications précédentes, **caractérisé en ce que** le serveur d'application (8) accède à des données d'un registre d'appels de groupe (6) afin d'obtenir des informations pour l'établissement de l'appel de groupe de données.

5. Procédé selon l'une des revendications 1 à 4, **caractérisé en ce que** la transmission des données aux membres récepteurs se fait par l'intermédiaire de canaux GPRS dédiés, sous la forme de liaisons point à point.

6. Procédé selon l'une des revendications 1 à 4, **caractérisé en ce que** la transmission des données aux membres récepteurs se fait en intégrant un système multidestinataire de diffusion multimédia.

7. Procédé selon la revendication 3, **caractérisé en ce que** le serveur d'application réalise une liaison avec un centre de service de diffusion/multidestinataire (5) à partir duquel les données sont réparties, en fonctionnement multidestinataire, sur les membres récepteurs individuels.

8. Procédé selon l'une des revendications 6 ou 7, **caractérisé en ce que** les informations pour un fonctionnement multidestinataire sont transmises par l'inteermédiaire d'une interface entre le BM-SC (5) et le CGR (6) ou le serveur d'application (8).

9. Système pour établir une liaison de données d'un service d'appel de groupe de données entre plusieurs membres d'un groupe d'appel vocal dans le cadre d'un service d'appel de groupe vocal dans un réseau de communication mobile, **caractérisé en ce qu'**il comprend :
un sous-système multimédia IP, IMS,
des moyens pour réaliser la liaison de données sous la forme d'une liaison de données contrôlée par protocole SIP, Session Initiation Protocol, SIP, comme partie intégrante d'un service d'appel de groupe de données, entre un membre de groupe émetteur et un ou plusieurs membres de groupe receveurs,
des moyens pour attribuer une identité de groupe IMS (IMS group ID) à chaque membre du groupe, en plus d'une identité de service d'appel de groupe vocal, VGCS-ID,
un serveur d'application (8) dans l'IMS pour commander le service d'appel de groupe de données entre des membres du groupe, des données de chaque membre du groupe étant acheminées jusqu'au serveur d'application (8) à l'aide de l'identité de groupe IMS, IMS group ID.

10. Programme informatique avec un code de programme qui, exécuté sur un ordinateur, met en oeuvre un procédé selon l'une des revendications 1 à 8.

11. Produit de programme informatique qui comprend un code de programme apte à être exécuté sur un ordinateur pour la mise en oeuvre du procédé selon l'une des revendications 1 à 8.
